# EUROPEAN PATENT APPLICATION

(11) **EP 4 678 896 A1**
(43) Date of publication of application: **14.01.2026**
(21) Application number: 25189455.6
(22) Date of filing: 14.07.2025
(51) Int. Cl.: F02C 3/22, F02C 7/224

(54) **CRYOGENIC BOTTOMING CYCLE UTILIZING A THERMAL BUS WITH MULTIPLE HEAT SOURCES**

(30) Priority: 12.07.2024 US 202418770854
(71) Applicant: RTX Corporation, Farmington, CT 06032 (US)
(72) Inventor: EVANS, Brandon M., Farmington, 06032 (US); TERWILLIGER, Neil J., Farmington, 06032 (US)
(74) Representative: Dehns

(57) **Abstract**

An aircraft propulsion system (25) includes a primary energy conversion device (36) that uses a cryogenic fuel (82) and air to generate power and thermal energy, a bottoming cycle (54) where a working fluid (90) is circulated within a closed circuit (120) that includes a bottoming compressor section (56) and a bottoming turbine section (58), the working fluid is compressed in the bottoming compressor section and expanded through the bottoming turbine section to generate shaft power, a thermal transfer circuit (66) that includes a thermal routing fluid (68) that is different to the working fluid, a thermal transfer heat exchanger (72) where thermal energy from the thermal routing fluid is communicated to the working fluid, and a primary heat exchanger (50) where thermal energy from the primary energy conversion device is communicated to the thermal routing fluid.

## Description

### TECHNICAL FIELD

The present invention relates generally to a bottom cycle for an aircraft propulsion system and more specifically to a bottoming cycle that utilizes a cryogenic fuel as a heat sink.

### BACKGROUND OF THE INVENTION

Gas turbine engines typically include a compressor where inlet air is compressed and delivered into a combustor. In the combustor, the compressed air is mixed with fuel and ignited to generate an exhaust gas flow. The exhaust flow is expanded through a turbine section to generate shaft power used to drive the compressor and a propulsive fan. Some energy in the high energy exhaust flow is recovered as it is expanded through a turbine section. However, a large amount of energy in the form of heat is simply exhausted from the turbine section to the atmosphere. A bottoming cycle utilizes recovered heat to generate additional useful work. A working fluid in the bottoming cycle is heated to drive a secondary turbine to generate additional shaft power. The working fluid in the bottoming cycle is then cooled, compressed, and reheated before expansion back through the turbine. The capability of the working fluid to accept heat limits energy recovery of the bottoming cycle.

### SUMMARY OF THE INVENTION

An aircraft propulsion system according to an aspect of the invention, among other possible things, includes a primary energy conversion device that uses a cryogenic fuel and air to generate power and thermal energy, a bottoming cycle where a working fluid is circulated within a closed circuit that includes a bottoming compressor section and a bottoming turbine section, the working fluid is compressed in the bottoming compressor section and expanded through the bottoming turbine section to generate shaft power, a thermal transfer circuit that includes a thermal routing fluid, the thermal routing fluid is different than the working fluid, thermal transfer heat exchanger where thermal energy from the thermal routing fluid is communicated to the working fluid, and a primary heat exchanger where thermal energy from the primary energy conversion device is communicated to the thermal routing fluid.

In any of the aspects or embodiments described above and herein, the primary energy conversion device may comprise a core engine that includes a compressor, combustor, and turbine where a cryogenic fuel is mixed with compressed air from the compressor in the combustor and ignited to generate an exhaust gas flow that is expanded through the turbine to generate shaft power, a propulsive fan that is coupled to be driven by the turbine (i.e., a core engine comprising a compressor, a combustor, and a turbine, wherein the combustor is configured to ignite a mixture of a cryogenic fuel and compressed air from the compressor to generate an exhaust gas flow, and the turbine section is configured to expand the exhaust gas flow therethrough to generate shaft power).

In any of the aspects or embodiments described above and herein, the aircraft propulsion system may further includes a fuel system that includes a cryogenic fuel storage tank and a fuel flow path for routing the cryogenic fuel to the energy conversion device, and a fuel/working fluid heat exchanger where thermal energy from the working fluid is communicated to the cryogenic fuel flow.

In any of the aspects or embodiments described above and herein, the primary energy conversion device may include a gas turbine engine that includes a combustor where fuel (e.g., the cryogenic fuel) is mixed with compressed air and ignited to generate an exhaust gas flow (i.e., the combustor may be configured to ignite a mixture of the cryogenic fuel and compressed air to generate an exhaust gas flow), and the exhaust gas flow is expanded through a turbine section to generate shaft power that is utilized to drive a propulsive fan (i.e., the turbine section may be configured to expand the exhaust gas flow therethrough to generate shaft power utilized to drive a propulsive fan). The exhaust gas flow may be routed through the primary heat exchanger for heating the thermal routing fluid.

In any of the aspects or embodiments described above and herein, the primary heat exchanger may be mounted to a first structure of an aircraft and the thermal transfer heat exchanger may be mounted to a second structure of the aircraft that is different than the first structure.

In any of the aspects or embodiments described above and herein, the thermal transfer heat exchanger and a fuel/working fluid heat exchanger may be mounted in a common aircraft structure.

In any of the aspects or embodiments described above and herein, the thermal transfer heat exchanger and a fuel/working fluid heat exchanger may be mounted in different aircraft structures.

In any of the aspects or embodiments described above and herein, the aircraft propulsion system may further include a secondary heat exchanger where thermal energy from a secondary source (or one of a plurality of secondary sources) is communicated into the thermal routing fluid (e.g. directly into the thermal routing fluid through the secondary heat exchanger).

In any of the aspects or embodiments described above and herein, the aircraft propulsion system may further include a bottoming cycle heat exchanger where thermal energy from a secondary heat source (or one of a plurality of secondary sources) is communicated (directly) to the working fluid (e.g., "directly" into the working fluid through the bottoming cycle heat exchanger).

In any of the aspects or embodiments described above and herein, a portion of the closed circuit may communicate working fluid with a cooling flow separate from the cryogenic fuel in supplemental heat exchanger.

In any of the aspects or embodiments described above and herein, the primary energy conversion device may include a fuel cell that uses the cryogenic fuel and air to generate electric power.

An aircraft propulsion system according to another aspect of the invention, among other possible things, includes a core engine that includes a compressor, combustor, and turbine where a cryogenic fuel is mixed with compressed air from the compressor in the combustor and ignited to generate an exhaust gas flow that is expanded through the turbine to generate shaft power, a propulsive fan that is coupled to be driven by the turbine, a bottoming cycle where a working fluid is circulated within a closed circuit that includes a bottoming compressor section and a bottoming turbine section, the working fluid is compressed in the bottoming compressor section and expanded through the bottoming turbine section to generate shaft power, a thermal transfer circuit that includes a thermal routing fluid, the thermal routing fluid is different than the working fluid, thermal transfer heat exchanger where thermal energy from the thermal routing fluid is communicated to the working fluid, a primary heat exchanger where thermal energy from the core engine is communicated to the thermal routing fluid.

In any of the aspects or embodiments described above and herein, the propulsion system may further comprise a fuel system that includes a cryogenic fuel storage tank and a fuel flow path for routing the cryogenic fuel to the core engine, and a fuel/working fluid heat exchanger where thermal energy from the working fluid is communicated to the cryogenic fuel.

In any of the aspects or embodiments described above and herein, the primary heat exchanger may be mounted to a first structure of an aircraft and the thermal transfer heat exchanger may be mounted to a second structure of the aircraft that is different than the first structure.

In any of the aspects or embodiments described above and herein, the thermal transfer heat exchanger and the fuel/working fluid heat exchanger may be mounted in a common aircraft structure.

In any of the aspects or embodiments described above and herein, the thermal transfer heat exchanger and the fuel/working fluid heat exchanger may be mounted in different aircraft structures.

In any of the aspects or embodiments described above and herein, the aircraft propulsion system may further include a secondary heat exchanger where thermal energy from a secondary source (or one or more secondary sources) is communicated into the thermal routing fluid (e.g., "directly" into the thermal routing fluid through the secondary heat exchanger).

In any of the aspects or embodiments described above and herein, the aircraft propulsion system may further include a bottoming cycle heat exchanger where thermal energy from a secondary heat source (or one or more secondary sources) is communicated (directly) to the working fluid. (e.g., "directly" into the working fluid through the bottoming cycle heat exchanger).

In any of the aspects or embodiments described above and herein, a portion of the closed circuit may communicate working fluid with a cooling flow separate from the cryogenic fuel in supplemental heat exchanger.

A method of operating an aircraft propulsion system according to another aspect of the invention, among other possible things, includes communicating thermal energy from a heat source into a thermal routing fluid circulating within a thermal transfer circuit, transferring thermal energy from the thermal routing fluid into a working fluid of a bottoming cycle where the heated working is circulated within a closed circuit that includes a bottoming compressor section and a bottoming turbine section, the working fluid is compressed in the bottoming compressor section and expanded through the bottoming turbine section to generate shaft power, and cooling the working fluid flow with a cryogenic fuel within a fuel/working fluid heat exchanger where thermal energy from the working fluid is communicated to the cryogenic fuel flow.

In any of the aspects or embodiments described above and herein, thermal energy may be generated by a core engine and transferred into the thermal routing fluid within a primary heat exchanger.

In any of the aspects or embodiments described above and herein, the method may further include communicating thermal energy from at least one secondary source into at least one of the working fluid flow and the thermal routing fluid.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft and aircraft propulsion system including a bottoming cycle.
Figure 2 is a schematic view of another example aircraft propulsion system including a fuel cell and a bottoming cycle.
Figure 3 is a schematic view of an example heat exchanger arrangement for recovering and transferring thermal energy.
Figure 4 is a schematic view of example arrangements of a bottoming cycle and a thermal transfer circuit within an aircraft.
Figure 5 is a schematic view of another example heat exchanger arrangement for recovering and transferring thermal energy.
Figure 6 is a schematic view of yet another example heats exchanger arrangement for recovering and transferring thermal energy.
Figure 7 is a schematic view of another set of example arrangements of a bottoming cycle and a thermal transfer circuit within an aircraft.

### DETAILED DESCRIPTION

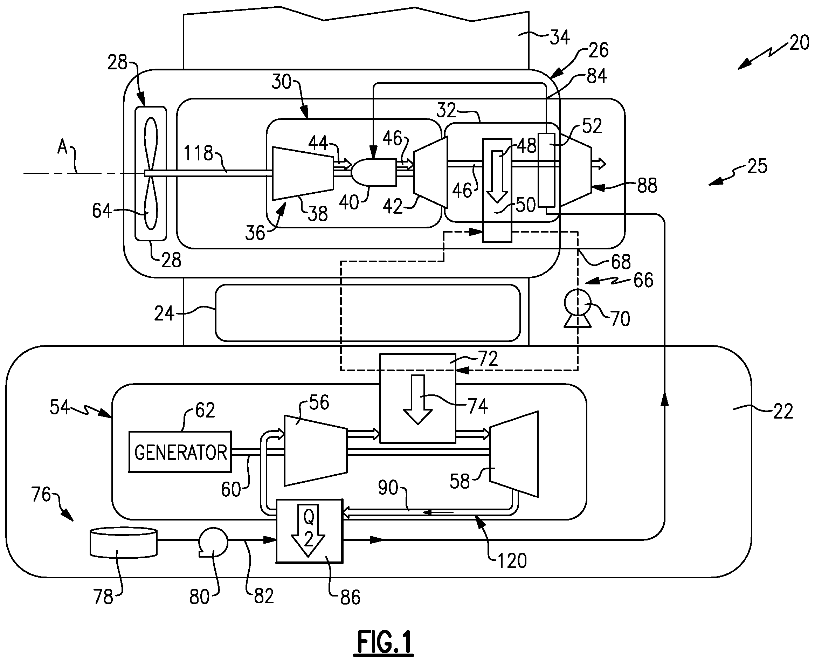

Figure 1 schematically illustrates an aircraft 20 and aircraft propulsion system 25 that includes a bottoming cycle 54 that generates shaft power from heat recovered from a core engine 36. A thermal transfer circuit 66 provides for thermal communication between the core engine 36 and the bottoming cycle 54 to improve thermal transfer efficiencies.

A working fluid 90 within the bottoming cycle 54 is compressed, heated, and then expanded through a bottoming turbine 58 to generate power. Accordingly, the working fluid 90 is optimized to facilitate efficient power generation. The thermal transfer circuit 66 includes a thermal routing fluid 68 that is not compressed or expanded to generate power and therefore is optimized to transfer thermal energy. Moreover, the thermal transfer circuit 66 provides for the accumulation and communication of thermal energy from various different locations and systems of the aircraft.

The aircraft 20 is shown schematically and includes a fuselage 22, wing 34, and a pylon 24 structure for supporting the core engine 36. A fan case 28 surrounds a fan 64. A nacelle structure 26 at least partially surrounds the core engine 36, fan case 28 and the fan 64. Although an example embodiment includes the fan case 28 and surrounding nacelle structure 26, other engine architectures and propulsor configuration may be used and are within the contemplation and scope of this disclosure. For example, an open fan rotor propulsive fan may be utilized and would benefit from this disclosure. The core engine 36 is supported within a core case 30. The core case 30 is attached to turbine exhaust case 32 that surrounds the hot section of the core engine 36. The features of the aircraft 20 and the propulsion system 25 are shown schematically to illustrate possible locations of various features within the aircraft 20. The propulsion system 25 includes features that provide for mounting of features of the bottoming cycle 54 in different structures of the aircraft 20. Mounting in different structures is provided by the thermal transfer circuit 66 to route thermal energy from different aircraft structures and locations into the bottoming cycle 54.

The example propulsion system 25 includes the core engine 36 that generates shaft power utilized to drive the propulsive fan 64. The example core engine 36 includes a compressor 38, a combustor 40 and the turbine 42 disposed along the longitudinal axis A. The fan 64 drives an inlet airflow into the compressor 38. The compressed inlet airflow is communicated as a pressurized core flow 44 to the combustor 40 where it is mixed with a fuel flow 84 and ignited to generate the exhaust gas flow 46. The exhaust gas flow 46 expands through the turbine 42 where energy is extracted and utilized to generate shaft power to drive an engine shaft 118. The engine shaft 118 drives the compressor 38 and the fan 64. The exhaust gas flow 46 is subsequently exhausted through a nozzle 88.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

A cryogenic fuel system 76 includes at least a fuel tank 78 and a fuel pump 80 to provide a liquid fuel flow 82 to the combustor 40. The example fuel system 76 is configured to provide a hydrogen based fuel such as a liquid hydrogen (LH₂). Although hydrogen is disclosed by way of example, other cryogenic, non-carbon based fuels could be utilized and are within the contemplation of this disclosure. The liquid fuel flow 82 is transformed into a gaseous flow 84 with heat from the exhaust gas flow 46 communicated within an exhaust gas heat exchanger 52. The gaseous flow 84 is then injected into the combustor 40.

The fuel in the tank 78 incudes features for storing a cryogenic fuel at temperatures required to maintain the fuel in a liquid phase. Temperatures required to maintain the cryogenic fuel in a liquid phase may be as low as about -412°F. In one example embodiment, the cryogenic fuel is maintained at a temperature below 0 °F. In another example embodiment, the fuel is maintained in the tank 78 at temperatures below -100 °F. The cryogenic fuel may be maintained at temperatures below about -150 °F and as low as about -435 °F.

The low temperatures of the cryogenic fuel 82 provide a source of heat absorption that is utilized in a bottoming cycle 54. The bottoming cycle 54 provides for recovering thermal energy otherwise lost as exhaust through the nozzle 88.

The example bottoming cycle 54 includes a bottoming compressor 56 that is driven by a bottoming turbine 58 though a bottoming shaft 60. A working fluid 90 is cycled within a closed circuit 120 between the bottoming compressor 56 and the bottoming turbine 58. The working fluid 90 is compressed in the bottoming compressor 56, heated within a thermal transfer heat exchanger 72, and then expanded through the bottoming turbine 58 to drive the bottoming shaft 60. In one disclosed example, the shaft 60 is coupled to drive a generator 62. Although the example output shaft 60 is illustrated as driving a generator 62, other accessory components of the propulsion system 25 or aircraft 20 may be coupled to and driven by the output shaft 60.

A first or primary heat exchanger 50 provides thermal communication of thermal energy 48 from the exhaust gas flow 46 into the thermal routing fluid 68 a thermal transfer circuit 66. A pump 70 is provided within the thermal transfer circuit 66 for moving the routing fluid 68. The thermal transfer circuit 66 provides only for the transfer of thermal energy and is not utilized for power generation. Instead, the thermal routing fluid 68 is specifically configured to optimize thermal transfer from a heat source to the working fluid 90. Accordingly, the thermal routing fluid 68 is material or compound that provides low heat loss over extended distances.

A fuel/working fluid heat exchanger 86 places the working fluid in thermal contact with the liquid fuel flow 82. The liquid fuel flow 82 accepts heat from the working fluid 90 to cool the working fluid prior to introduction back into the bottoming compressor 56. The liquid fuel flow 82 is vaporized prior to introduction into the combustor 40 and therefore heat transferred from the working fluid 90 is utilized to aid in heating of the fuel. The exhaust heat exchanger 52 is disposed downstream of the first heat exchanger 50 and provides further heating and transformation into a vaporized fuel flow 84.

In one example embodiment, the thermal transfer circuit 68 bridges the distance between the core engine 36 and the bottoming cycle 54. Thermal energy 48 from the core engine 36 is input into the thermal routing fluid 68. The thermal routing fluid 68 is pumped to a thermal transfer heat exchanger 72 where thermal energy, schematically indicated by arrow 74 into the working fluid 90 with the closed bottoming circuit 120. Accordingly, each of the working fluid 90 and the thermal routing fluid 68 may be optimized for the specific functions. The type and quantity of working fluid 90 is optimized to generate work from the input thermal energy. The type and quantity of the thermal routing fluid 68 is optimized to reduce losses during transport of thermal energy from different locations of the aircraft 20.

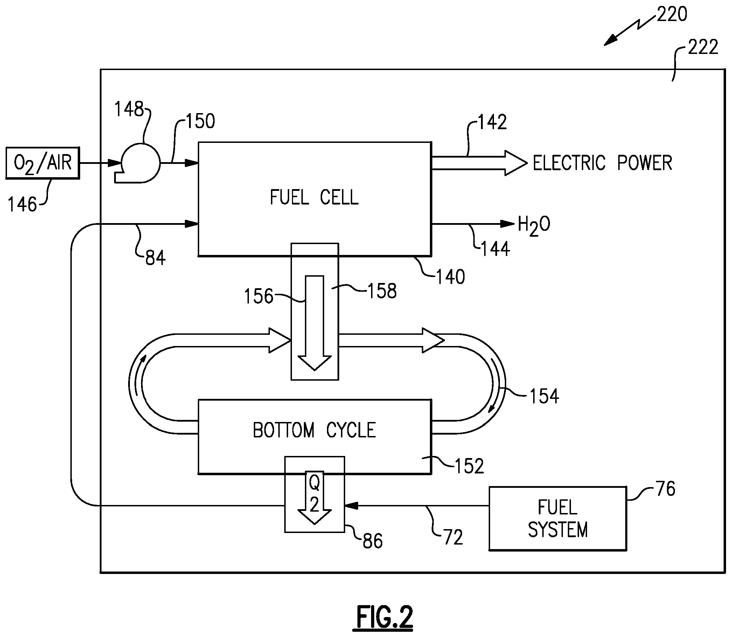

Referring to Figure 2, another example propulsion system 220 is schematically shown and includes a bottoming cycle 152 that recovers heat generated by a fuel cell 140. The fuel cell 140 generates electric power 142 from a cryogenic fuel flow 84 and a flow of oxygen 150 from an oxygen source 146 and is supported in an aircraft structure 222. The oxygen flow 150 may be provided by a pump 148. The oxygen flow 150 may be separated from ambient air and/or be from a dedicated oxygen source. The fuel cell 140 generates electric power 142 and exhausts water 144 as a waste product. The electric power 142 may be used to power aircraft devices and/or propulsion systems such as the fan 64 as shown in Figure 1.

Operation of the fuel cell 140 generates heat as schematically shown at 156. The heat 156 is communicated into a working fluid flow 154 of the bottoming cycle 152 through a fuel cell heat exchanger 158. The bottoming cycle 152 utilizes the heated working fluid 154 to generate power in the same manner as explained with regard to the propulsion system 20 illustrated in Figure 1. The fuel system 76 provides a flow of vaporized fuel 84 to the fuel cell 140. A flow of fuel in a liquid state 82 is utilized to cool the working fluid 154 in a fuel/working fluid heat exchanger 86. The fuel cell 140 may be utilized as the primary energy conversion device of the propulsion system 220. The fuel cell 140 may also be utilized in combination with the core engine 36 described in reference to Figure 1. Moreover, although a core engine 36 and the fuel cell 140 are disclosed by way of example, other energy conversion devices and systems that generate heat may be utilized and are within the scope and contemplation of this disclosure.

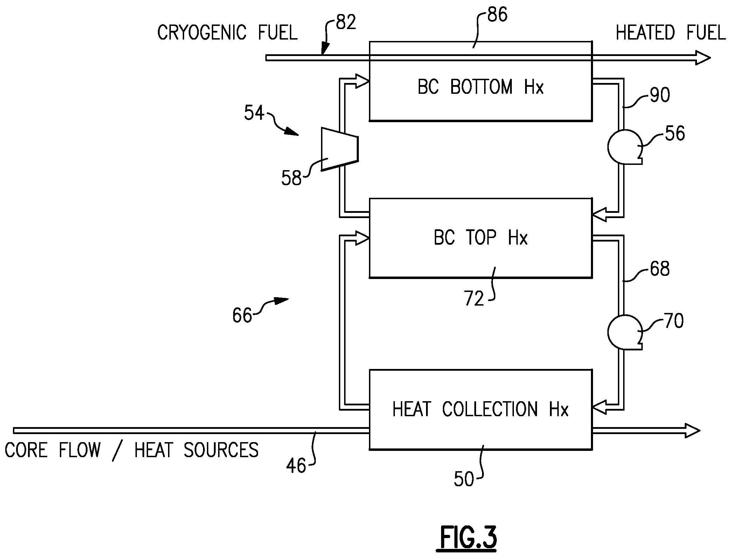

Referring to Figure 3 with continued reference to Figure 1, the heat exchangers of the example propulsion system are schematically shown to illustrate how thermal energy is routed between a heat source and the bottoming cycle 54. Thermal energy from the gas flow 46 is communicated to the thermal routing fluid 68 in the primary heat exchanger 50. A pump moves the routing fluid 68 through the transfer circuit 66 that includes the transfer heat exchanger 72. The transfer heat exchanger 72 is located at the bottoming cycle 54 and communicates thermal energy into the working fluid 90. The working fluid 90 continuously circulates to generate shaft power. The example bottoming cycle 54 operates by compressing, heating, expanding, and cooling of the working fluid 90. Cooling is provided by the cold sink provided by the cryogenic fuel flow 82 through the fuel/working fluid heat exchanger 86.

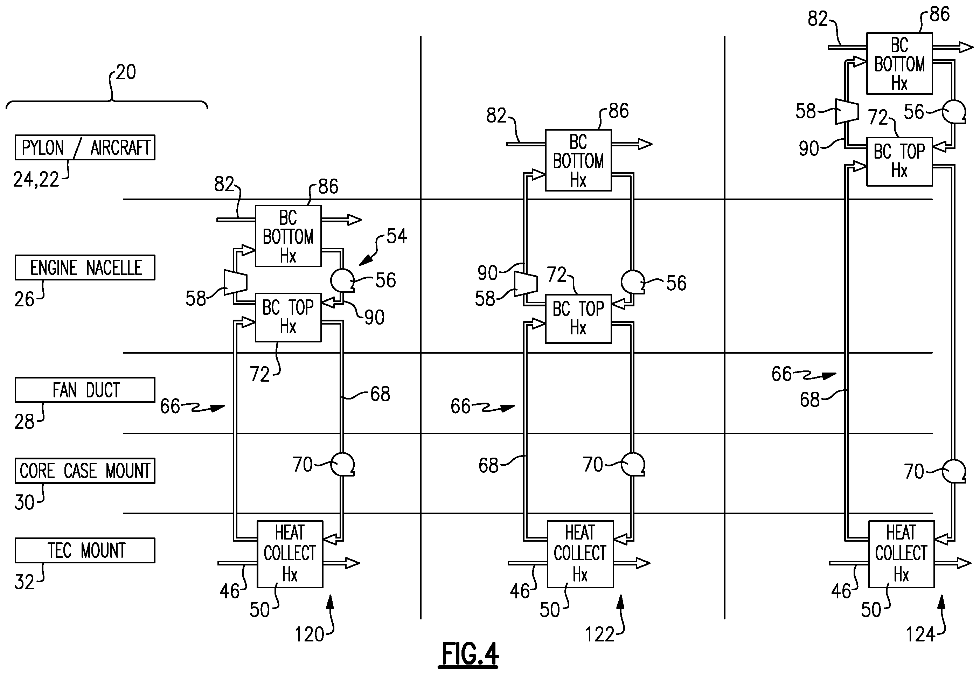

Referring to Figure 4 with continued reference to Figures 1 and 3, the advantages of providing a dedicated thermal transfer circuit are illustrated by the example arrangements schematically shown. The example arrangements are shown schematically in reference to locations within specific structures of the aircraft 20.

In one example arrangement 120, the primary heat exchanger 50 is located within the turbine exhaust case 32 (illustrated as TEC 32) and communicates thermal energy into the routing fluid 68. The transfer circuit 66 extends from the turbine exhaust case 32 to the transfer heat exchanger 72 that is located proximate to the bottoming cycle 54 located in the engine nacelle 26. Instead of routing high pressure working fluid 90 to the turbine exhaust case 32, the transfer circuit 66 communicates the thermal energy to the bottoming cycle 54. Accordingly, potential pressure and temperature losses that may occur from routing working fluid over such distances are substantially reduced or eliminated.

Another example arrangement 122 includes the transfer heat exchanger 72 disposed in the engine nacelle 26 and the fuel/working fluid heat exchanger disposed within the pylon or fuselage 24, 22 of the aircraft 20. The bottoming turbine 58 and the bottoming compressor 56 are located proximate the transfer heat exchanger 72 within the engine nacelle 26. The location of the fuel/working fluid heat exchanger 86 within the fuselage 22 or pylon 24 may provide a desired placement near the fuel tank 78. Locating the heat exchanger 86 closer to the source of the cryogenic fuel may further improve cooling of the working fluid 90.

In an example arrangement indicated at 124, the transfer heat exchanger 72, bottoming turbine 58, bottoming compressor 56 and the fuel/working fluid heat exchanger 86 are located within the aircraft fuselage 22 or pylon 24. The distance between the bottoming cycle features and the source of the thermal energy is enabled by the low thermal losses provided by the routing fluid 68. Increased distances between the source of thermal energy and the bottoming cycle are enabled by the low thermal losses provided by the dedicated thermal transfer circuit 66.

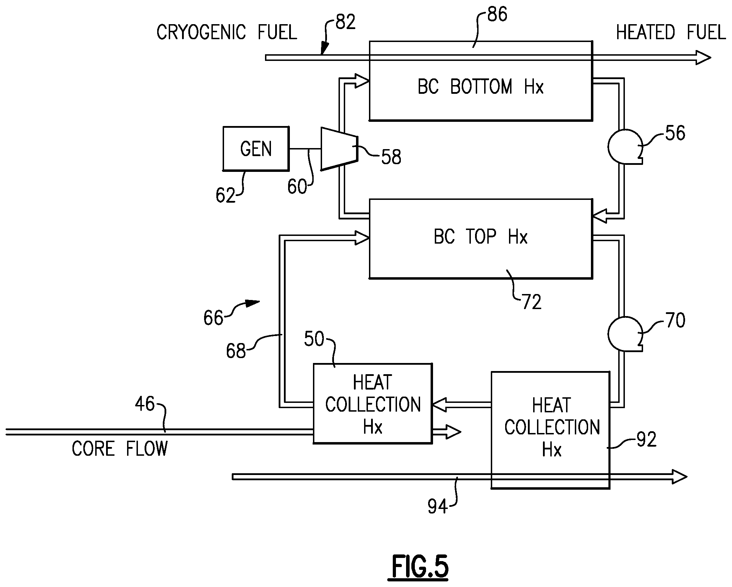

Referring to Figure 5 with continued reference to Figure 1, the transfer circuit 66 is schematically shown providing for the input of additional thermal energy from a secondary source. Thermal energy 94 from a secondary source is communicated into the routing fluid 68 within a secondary heat exchanger 92. The primary heat source in this example is the exhaust gas flow 46 that is communicated within the primary heat exchanger 50. In this example, thermal energy 94 is input into the routing fluid 68 before thermal energy from the exhaust gas flow 46. The sequence of heat input is defined to maximize the amount of thermal energy that is captured. Accordingly, lower temperature flows are communicated into the routing fluid 68 before higher temperature flows.

Moreover, although one secondary heat source is shown, multiple secondary heat sources may be communicated into the routing fluid 68 in a defined hierarchy from low to high temperatures.

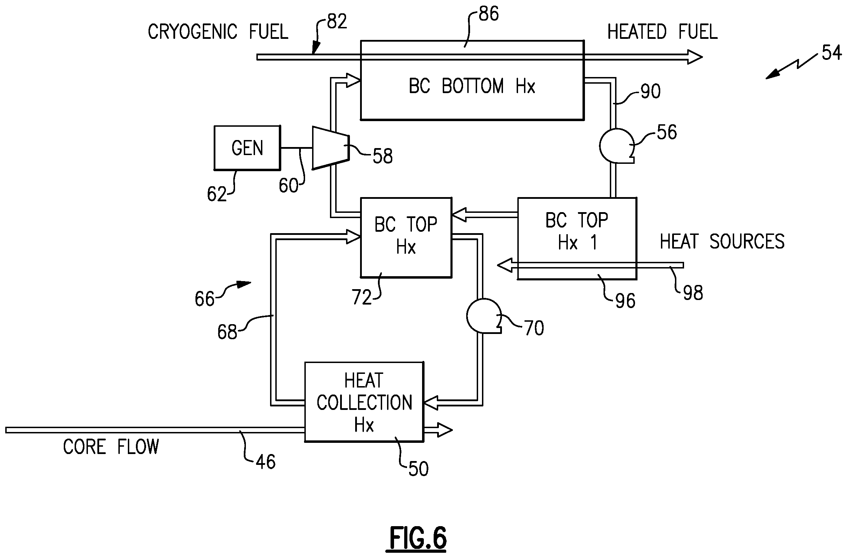

Referring to Figure 6, with continued reference to Figure 1, the transfer circuit 66 and the bottoming cycle 54 are shown with additional thermal energy 98 introduced directly into the working fluid 90 in an additional heat exchanger 96. Thermal energy is input into the working fluid 90 from both the transfer circuit 66 and from the additional heat exchanger 96. Different combinations of heat input into both the working fluid 90 and the routing fluid 68 as illustrated in Figure 5. Although one additional heat exchanger 96 is shown by way of example, other combinations of heat exchangers could be utilized and are within the contemplation and scope of this disclosure.

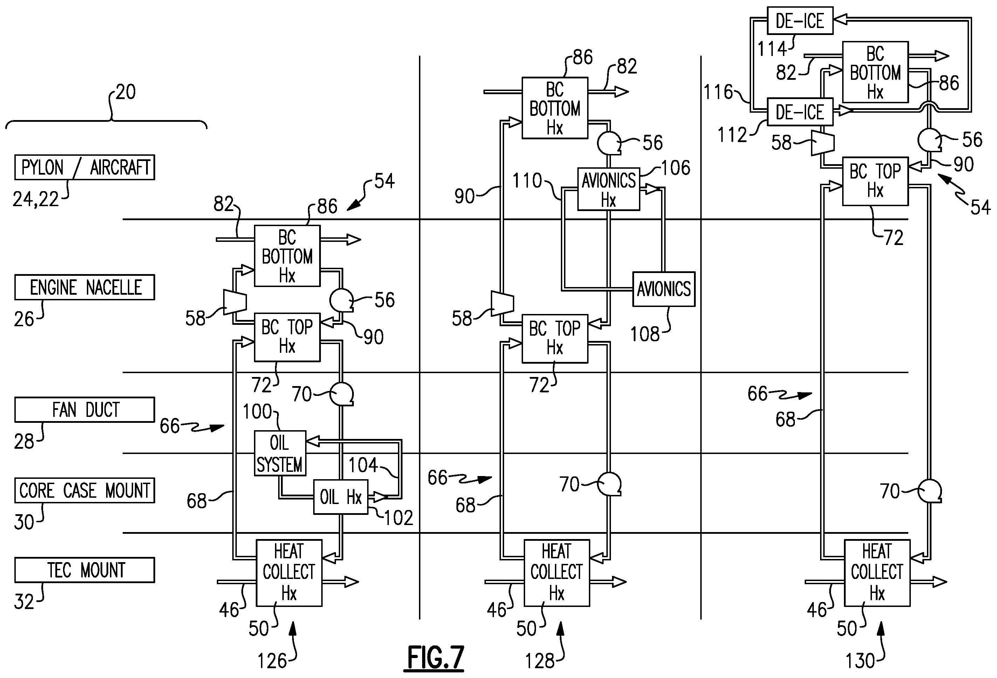

Referring to Figure 7 with continued reference to Figure 1, example arrangements of thermal sources in different locations of the aircraft 20 are schematically shown. The example arrangements are enabled by the properties of the thermal routing fluid 68 by providing for the low loss accumulation of thermal energy from different systems at different locations within the aircraft 20.

In one example arrangement schematically indicated at 126, an oil system 100 transfers thermal energy 104 into the routing fluid 68 through an oil heat exchanger 102. The oil heat exchanger 102 inputs heat energy into the routing fluid 68 prior to heat input from the hotter exhaust gas flow 46 within the primary heat exchanger 50. The bottoming cycle 54 is located within the engine nacelle 26 in this example embodiment. The communication of thermal energy from the turbine exhaust case 32 into the bottoming cycle 54 is enabled by the low thermal losses provided by the routing fluid 68.

Another arrangement is schematically indicated at 128 and provides for the transfer of thermal energy from an avionics system 108 within a heat exchanger 106 directly into the working fluid 90. In this example, the location of the bottoming cycle 54 facilitates the direct communication of thermal energy into the working fluid 90. The transfer heat exchanger 72 communicates heat from the exhaust gas flow 46 near the bottoming turbine 58. In this example embodiment, the bottoming turbine 58 is located within the engine nacelle 26 along with the transfer heat exchanger 72. The bottoming compressor 56, avionics heat exchanger 106 and the fuel/working fluid heat exchanger 86 are located within the aircraft fuselage 22 or pylon 24. The thermal transfer circuit 66 enables the advantageous placement of each of the heat exchangers 72, 106 to increase thermal transfer efficiencies and heat recovery. In this example, heat transfer from the avionics system 108 can be located closer to that system within the fuselage 22. In the same arrangement, the transfer heat exchanger 72 and bottoming turbine 58 can be located within the engine nacelle 26 to utilize and locate power generated by the bottoming turbine 58 where it may best be utilized.

In another arrangement schematically indicated at 130, a de-ice system 114 may be located within the pylon 24, fuselage 22 or wing 34 of the aircraft 20. The transfer circuit 66 brings heat from core engine 36 (exhaust gas flow 46) to the bottoming cycle 54. The bottoming cycle 54 is located away from the core engine 36 and closer to the cooling source. In one example embodiment, the de-ice heat exchanger 112 inputs thermal energy 116 directly into the working fluid 90. The close location of the de-ice system 114 to the bottoming cycle 54 provides for the direct input of heat. The close location is enabled by the communication of thermal energy from the primary heat exchanger 50 through the thermal transfer circuit 66.

Accordingly, the functions of generating power from thermal energy and the transfer of thermal energy are split between a working fluid 90 that is optimized to facilitate efficient power generation and a thermal routing fluid 68 that is optimized to transfer thermal energy.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. An aircraft propulsion system (25) comprising:
a primary energy conversion device (36, 140) configured to use a cryogenic fuel and air to generate power and thermal energy (48, 156);
a bottoming cycle (54, 152) configured to circulate a working fluid (90, 154) within a closed circuit (120) comprising a bottoming compressor section (56) and a bottoming turbine section (58), wherein the bottoming compressor section (56) is configured to compress the working fluid (90, 154), and the bottoming turbine section (58) is configured to expand the working fluid (90, 154) therethrough to generate shaft power;
a thermal transfer circuit (66) comprising a thermal routing fluid (68), wherein the thermal routing fluid (68) is different than the working fluid (90, 154);
a thermal transfer heat exchanger (72) configured to communicate thermal energy (74) from the thermal routing fluid (68) to the working fluid (90, 154); and
a primary heat exchanger (50) configured to communicate thermal energy (48) from the primary energy conversion device (36, 140) to the thermal routing fluid (68).

2. The aircraft propulsion system (25) as recited in claim 1, further comprising a fuel system (76) comprising a cryogenic fuel storage tank (78) and a fuel flow path for routing the cryogenic fuel to the primary energy conversion device (36, 140), and a fuel/working fluid heat exchanger (86) configured to communicate thermal energy from the working fluid (90, 154) to a cryogenic fuel flow (72).

3. The aircraft propulsion system (25) as recited in claim 1 or 2, wherein the primary energy conversion device comprises a gas turbine engine (36) comprising a combustor (40) configured to ignite a mixture of the cryogenic fuel and compressed air to generate an exhaust gas flow (46), and a turbine section (42) configured to expand the exhaust gas flow (46) therethrough to generate shaft power utilized to drive a propulsive fan (64), wherein the exhaust gas flow (46) is routed through the primary heat exchanger (50) for heating the thermal routing fluid (68).

4. The aircraft propulsion system (25) as recited in claim 1, 2 or 3, wherein the primary energy conversion device comprises a fuel cell (140) configured to use the cryogenic fuel and air to generate electric power (142).

5. An aircraft propulsion system (25) comprising:
a core engine (36) comprising a compressor (38), a combustor (40), and a turbine (42), wherein the combustor (40) is configured to ignite a mixture of a cryogenic fuel and compressed air from the compressor to generate an exhaust gas flow (46), and the turbine section (42) is configured to expand the exhaust gas flow (46) therethrough to generate shaft power;
a propulsive fan (64) coupled to be driven by the turbine (42);
a bottoming cycle (54, 152) configured to circulate a working fluid (90, 154) within a closed circuit (120) comprising a bottoming compressor section (56) and a bottoming turbine section (58), wherein the bottoming compressor section (56) is configured to compress the working fluid (90, 154) and the bottoming turbine section (58) is configured to expand the working fluid (90, 154) therethrough to generate shaft power;
a thermal transfer circuit (66) comprising a thermal routing fluid (68), wherein the thermal routing fluid (68) is different than the working fluid (90, 154);
a thermal transfer heat exchanger (72) configured to communicate thermal energy (74) from the thermal routing fluid (68) to the working fluid (90, 154); and
a primary heat exchanger (50) configured to communicate thermal energy (48; 94) from the core engine (36) to the thermal routing fluid (68).

6. The aircraft propulsion system (25) as recited in claim 5, further comprising:
a fuel system (76) comprising a cryogenic fuel storage tank (78) and a fuel flow path for routing the cryogenic fuel to the core engine (36); and
a fuel/working fluid heat exchanger configured to communicate thermal energy from the working fluid (90, 154) to a cryogenic fuel flow.

7. The aircraft propulsion system (25) as recited in any preceding claim, wherein the primary heat exchanger (50) is mounted to a first structure (26) of an aircraft (20) and the thermal transfer heat exchanger (72) is mounted to a second structure (24) of the aircraft (20) that is different than the first structure.

8. The aircraft propulsion system (25) as recited in any preceding claim, wherein the thermal transfer heat exchanger (72) and a or the fuel/working fluid heat exchanger (86) are mounted in a common aircraft structure.

9. The aircraft propulsion system (25) as recited in any of claims 1 to 7, wherein the thermal transfer heat exchanger (72) and a or the fuel/working fluid heat exchanger (86) are mounted in different aircraft structures.

10. The aircraft propulsion system (25) as recited in any preceding claim, further comprising a secondary heat exchanger (92, 102) configured to communicate thermal energy from one or more secondary sources (94, 100) to the thermal routing fluid (68).

11. The aircraft propulsion system (25) as recited in any preceding claim, further comprising a bottoming cycle heat exchanger (106, 112) configured to communicate thermal energy from one or more secondary sources (108, 114) to the working fluid (90, 154).

12. The aircraft propulsion system (25) as recited in any preceding claim, wherein a portion of the closed circuit (120) is configured to communicate the working fluid (90, 154) with a cooling flow separate from the cryogenic fuel in a supplemental heat exchanger.

13. A method of operating an aircraft propulsion system (25) comprising:
communicating thermal energy from a heat source (46) into a thermal routing fluid (68) circulating within a thermal transfer circuit (66);
transferring thermal energy from the thermal routing fluid (68) into a working fluid (90, 154) of a bottoming cycle (54, 152) in which the working fluid (154) is circulated within a closed circuit (120) comprising a bottoming compressor section (56) and a bottoming turbine section (58), wherein the working fluid (90, 154) is compressed in the bottoming compressor section (56) and expanded through the bottoming turbine section (58) to generate shaft power; and
cooling the working fluid (90, 154) with a cryogenic fuel within a fuel/working fluid heat exchanger (86) where thermal energy from the working fluid (90, 154) is communicated to the cryogenic fuel.

14. The method as recited in claim 13, wherein thermal energy is generated by a core engine (36) and transferred into the thermal routing fluid (68) within a primary heat exchanger (50).

15. The method as recited in claim 13 or 14, further comprising communicating thermal energy from at least one secondary source (94, 100, 108, 114) into at least one of the working fluid flow (154) and the thermal routing fluid (68).
